# EUROPEAN PATENT APPLICATION

(11) **EP 4 053 757 A1**
(43) Date of publication of application: **07.09.2022**
(21) Application number: 19950856.5
(22) Date of filing: 29.10.2019
(51) Int. Cl.: G06N 20/00

(54) **DEGRADATION SUPPRESSION PROGRAM, DEGRADATION SUPPRESSION METHOD, AND INFORMATION PROCESSING DEVICE**

(71) Applicant: FUJITSU LIMITED, Kawasaki-shi, Kanagawa 211-8588 (JP)
(72) Inventor: KATOH, Takashi, Kawasaki-shi, Kanagawa 211-8588 (JP); UEMURA, Kento, Kawasaki-shi, Kanagawa 211-8588 (JP); YASUTOMI, Suguru, Kawasaki-shi, Kanagawa 211-8588 (JP); HAYASE, Tomohiro, Kawasaki-shi, Kanagawa 211-8588 (JP); UMEDA, Yuhei, Kawasaki-shi, Kanagawa 211-8588 (JP)
(74) Representative: Hoffmann Eitle
(86) International application number: PCT/JP2019/042395
(87) International publication number: WO 2021/084623

(57) **Abstract**

A deterioration suppression device generates a plurality of trained machine learning models having different characteristics on the basis of each training data included in a first training data set and assigned with a label indicating correct answer information. In a case where estimation accuracy of label estimation with respect to input data to be estimated by any trained machine learning model among the plurality of trained machine learning models becomes lower than a predetermined standard, the deterioration suppression device generates a second training data set including a plurality of pieces of training data using an estimation result by a trained machine learning model with the estimation accuracy equal to or higher than the predetermined standard. The deterioration suppression device executes re-learning of the trained machine learning model with the estimation accuracy lower than the predetermined standard using the second training data set.

## Description

### FIELD

The present invention relates to a deterioration suppression program, a deterioration suppression method, and an information processing apparatus.

### BACKGROUND

Conventionally, a trained machine learning model using machine learning that implements data discrimination, a classification function, and the like (hereinafter may be simply referred to as a "model") has been used. In machine learning, a "domain shift" may occur in which distribution (characteristic) of applied data gradually differs with respect to a labeled data set used for the learning as time passes. In this case, the trained machine learning model carries out the discrimination and classification according to the training data having been learned, whereby the accuracy of the trained machine learning model deteriorates when tendencies of input data (data distribution) changes during operation.

In recent years, ensemble learning has been used as a technique for suppressing deterioration in accuracy. Specifically, for example, a model capable of outputting predicted values and certainty factors is used to learn a plurality of different models using a labeled data set usable for learning. Then, at a time of application, the predicted values of the models with the highest certainty factor among the outputs of the plurality of models are combined to be treated as an overall output.

### SUMMARY

### TECHNICAL PROBLEM

However, according to the technique described above, it is difficult to maintain the accuracy of the entire models for the data in which the domain shift occurs.

For example, according to the ensemble learning described above, it is not possible to specify the output in a case where the certainty factors of all models decrease. Furthermore, in a case where the certainty factors of all the models once decrease and then increase again, such as when a large domain shift occurs, reliability of the certainty factors themselves is low, and thus reliability of estimation accuracy of the models also decreases. As described above, according to the ensemble learning described above, it is difficult to suppress the deterioration in accuracy of the entire models.

In one aspect, it is aimed to provide a deterioration suppression program, a deterioration suppression method, and an information processing apparatus capable of suppressing deterioration in accuracy of entire models.

### SOLUTION TO PROBLEM

In a first plan, a deterioration suppression program causes a computer to execute a process of generating a plurality of trained machine learning models having different characteristics on the basis of each training data included in a first training data set and assigned with a label indicating correct answer information. In a case where estimation accuracy of estimation of the label with respect to input data to be estimated by any trained machine learning model among the plurality of trained machine learning models becomes lower than a predetermined standard, the deterioration suppression program causes the computer to execute a process of generating a second training data set including a plurality of pieces of training data using an estimation result by a trained machine learning model with the estimation accuracy equal to or higher than the predetermined standard. The deterioration suppression program causes the computer to execute a process of re-learning the trained machine learning model with the estimation accuracy lower than the predetermined standard using the second training data set.

### ADVANTAGEOUS EFFECTS OF INVENTION

In one aspect, it becomes possible to suppress deterioration in accuracy of entire models.

### BRIEF DESCRIPTION OF DRAWINGS

FIG. 1 is a diagram for explaining a deterioration suppression device according to a first embodiment;
FIG. 2 is a diagram for explaining problems of ensemble learning;
FIG. 3 is a functional block diagram illustrating a functional configuration of the deterioration suppression device according to the first embodiment;
FIG. 4 is a diagram illustrating exemplary information stored in an initial labeled data DB;
FIG. 5 is a diagram illustrating exemplary information stored in an initial unlabeled data DB;
FIG. 6 is a diagram illustrating exemplary information stored in an estimation target data DB;
FIG. 7 is a diagram illustrating exemplary information stored in an estimation result DB;
FIG. 8 is a diagram for explaining a first model-learning method;
FIG. 9 is a diagram for explaining a second model-learning method;
FIG. 10 is a diagram for explaining a third model-learning method;
FIG. 11 is a diagram for explaining a fourth model-learning method;
FIG. 12 is a diagram for explaining re-learning;
FIG. 13 is a flowchart illustrating a flow of a series of processes according to the first embodiment;
FIG. 14 is a flowchart illustrating a flow of an estimation process according to the first embodiment;
FIG. 15 is a diagram for explaining effects of the first embodiment;
FIG. 16 is a diagram for explaining specification of the number of clusters and center points;
FIG. 17 is a diagram for explaining clustering after operation;
FIG. 18 is a diagram for explaining labeling of input data;
FIG. 19 is a diagram for explaining details of determination of model accuracy;
FIG. 20 is a diagram for explaining exemplary recovery when deterioration of a plurality of models is detected; and
FIG. 21 is a diagram for explaining an exemplary hardware configuration.

### DESCRIPTION OF EMBODIMENTS

Hereinafter, embodiments of a deterioration suppression program, a deterioration suppression method, and an information processing apparatus according to the present invention will be described in detail with reference to the drawings. Note that the embodiments do not limit the present invention. Furthermore, each of the embodiments may be appropriately combined within a range without inconsistency.

### [First Embodiment]

### [Description of Deterioration Suppression Device]

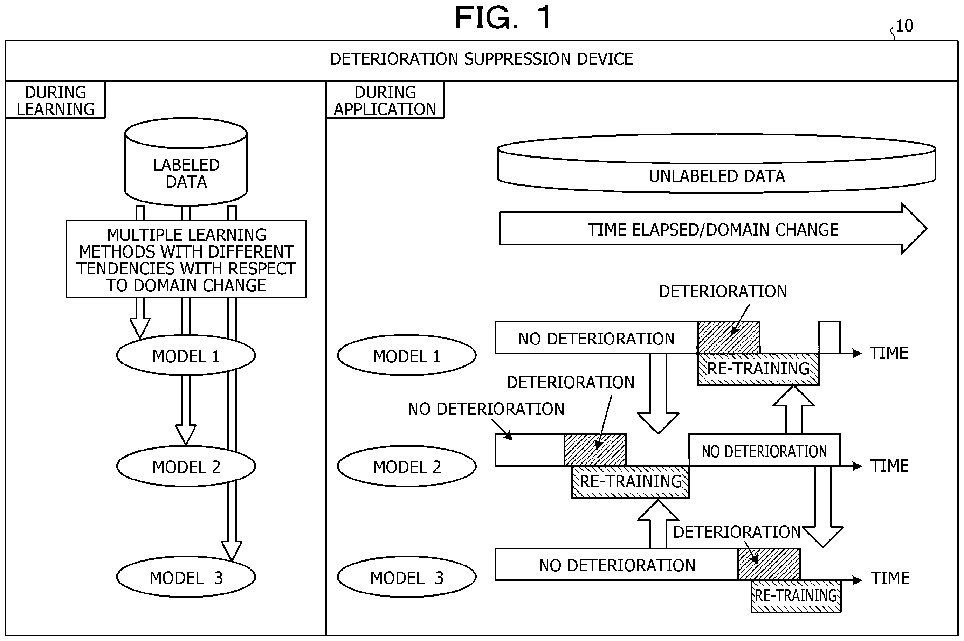

FIG. 1 is a diagram for explaining a deterioration suppression device 10 according to a first embodiment. As illustrated in FIG. 1, at a time of learning, the deterioration suppression device 10 trains a plurality of trained machine learning models using a labeled data set. Then, at a time of application, the deterioration suppression device 10 executes label estimation of unlabeled data in which a domain changes as time passes using the plurality of trained machine learning models having been learned. At this time, the deterioration suppression device 10 detects deterioration in accuracy of each model to carry out re-learning of the model with the deterioration in accuracy using a model with no deterioration in accuracy, thereby maintaining the estimation accuracy.

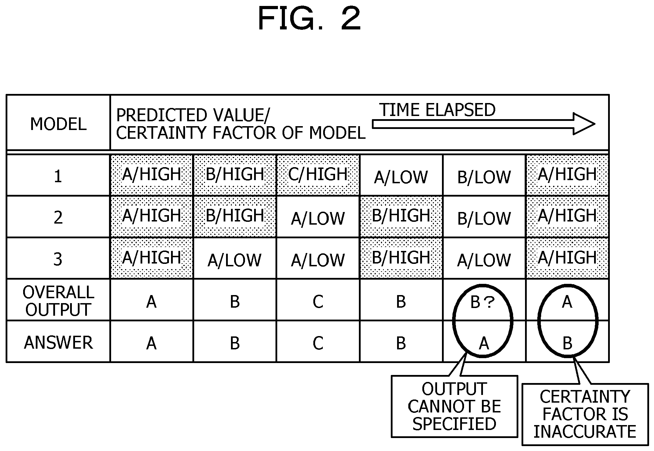

Here, problems of commonly used ensemble learning will be described. FIG. 2 is a diagram for explaining problems of the ensemble learning. As illustrated in FIG. 2, the ensemble learning uses models capable of outputting predicted values and certainty factors as output for input, and at the time of application, the predicted values with the high certainty factor among the outputs of the multiple models are combined to be treated as an overall output.

For example, while the prediction results of the models with the high certainty factor are adopted in the initial stage of the application, the output may not be specified when the certainty factors of all the models decrease as time passes, which results in deterioration in prediction performance of the entire models. Furthermore, in a case where the certainty factors decrease and then increase again, it is unclear why the certainty factors once decreased increase so that the certainty factors may not be reliable and the obtained results are highly likely inaccurate.

In this manner, according to the ensemble learning, it is not possible to follow the "domain shift" in which distribution of applied data gradually differs with respect to the labeled data set used for the learning as time passes, and is not possible to suppress the deterioration in accuracy of the entire models.

In view of the above, the deterioration suppression device 10 according to the first embodiment uses a feature generator that indicates different tendencies depending on a domain change and a detector of deterioration in accuracy, thereby reducing occurrence of a state in which the estimation accuracy of all the models deteriorates.

Specifically, for example, at the time of learning, the deterioration suppression device 10 uses labeled data, which is training data, to generate a model 1, a model 2, and a model 3 in such a manner that the same estimation (classification) is performed while feature amounts to be learned are different. For example, while the models 1 to 3 are learned using training data in which image data is used as an explanatory variable and an animal name is used as an objective variable (label), a variation is imparted to the feature amount to be learned by using image data or the like with noise added to each model.

At a time of subsequent application, the deterioration suppression device 10 inputs each unlabeled data, which is an estimation target, to the learned model 1, model 2, and model 3 to execute estimation processing as needed. Here, when the deterioration suppression device 10 detects deterioration in accuracy of the model 2 after a lapse of time, it generates re-training data in which the estimation results of the model 1 and model 3 having no deterioration in accuracy with respect to the unlabeled data in which the deterioration in accuracy of the model 2 is detected are set as correct answer information. Then, the deterioration suppression device 10 executes re-learning of the model 2.

As time further passes, when the deterioration suppression device 10 detects deterioration in accuracy of the model 1, it generates re-training data in which the estimation results of the model 2 and model 3 having no deterioration in accuracy with respect to the unlabeled data in which the deterioration in accuracy of the model 1 is detected are set as correct answer information. Then, the deterioration suppression device 10 executes re-learning of the model 1.

As described above, the deterioration suppression device 10 trains a plurality of models using a plurality of learning methods that cause different output changes depending on a type of a domain change. Then, the deterioration suppression device 10 estimates deterioration in accuracy of each model, and re-trains the model in which the deterioration in accuracy is detected with the learning method same as that of the deteriorated model using data labeled by models in which no deterioration in accuracy is detected. As a result, the deterioration suppression device 10 is enabled to suppress the deterioration in accuracy of the entire models.

### [Functional Configuration of Deterioration Suppression Device]

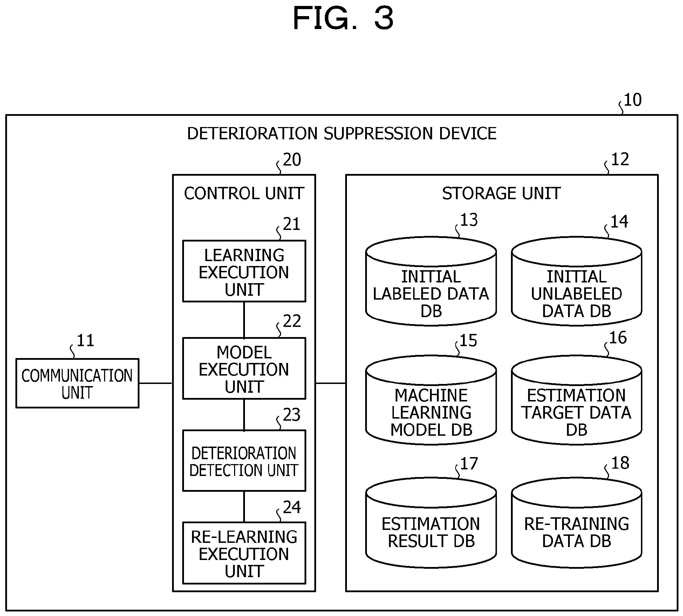

FIG. 3 is a functional block diagram illustrating a functional configuration of the deterioration suppression device 10 according to the first embodiment. As illustrated in FIG. 3, the deterioration suppression device 10 includes a communication unit 11, a storage unit 12, and a control unit 20.

The communication unit 11 is a processing unit that controls communication with other devices, which is, for example, a communication interface or the like. For example, the communication unit 11 receives various instructions from an administrator terminal, and transmits, to the administrator terminal, various kinds of information such as a learning result, an estimation result, an accuracy deterioration state, and the like. Furthermore, the communication unit 11 is also capable of receiving training data, data to be estimated, and the like.

The storage unit 12 is an exemplary storage device that stores various kinds of data, programs to be executed by the control unit 20, and the like, which is, for example, a memory, a hard disk, or the like. For example, the storage unit 12 stores an initial labeled data DB 13, an initial unlabeled data DB 14, a trained machine learning model DB 15, an estimation target data DB 16, an estimation result DB 17, and a re-training data DB 18.

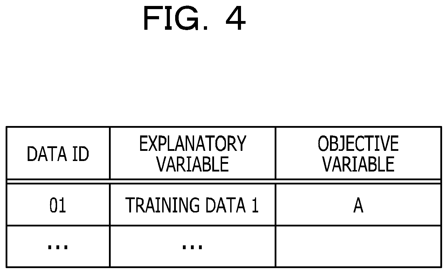

The initial labeled data DB 13 is a database that stores a data set including labeled data to be used for supervised learning of a trained machine learning model. FIG. 4 is a diagram illustrating exemplary information stored in the initial labeled data DB 13. As illustrated in FIG. 4, the initial labeled data DB 13 stores "data ID, explanatory variable, and objective variable" in association with each other.

The "data ID" stored here is an identifier for identifying data, the "explanatory variable" indicates image data to serve as the explanatory variable at the time of learning, and the "objective variable" indicates correct answer information (label) to serve as the objective variable at the time of learning. In the example of FIG. 4, the labeled data with the data ID "01" indicates an example in which the explanatory variable is "training data 1" and the objective variable is "A". Note that, taking image classification as an example, examples of the labeled data include "image data showing a cat" serving as the explanatory variable and a "cat" serving as the objective variable.

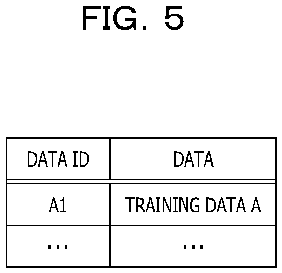

The initial unlabeled data DB 14 is a database that stores a data set including unlabeled data to be used for unsupervised learning of a trained machine learning model. FIG. 5 is a diagram illustrating exemplary information stored in the initial unlabeled data DB 14. As illustrated in FIG. 5, the initial unlabeled data DB 14 stores "data ID, and data" in association with each other.

The "data ID" stored here is an identifier for identifying data, and the "data" indicates image data at the time of learning. In the example of FIG. 5, an exemplary case where the unlabeled data of the data ID "A1" is "training data A" is illustrated. Note that, taking image classification as an example, examples of the unlabeled data include "image data showing a dog".

The trained machine learning model DB 15 is a database that stores learning results of models. Specifically, for example, the trained machine learning model DB 15 stores various parameters that can construct each of the model 1, model 2, and model 3 as a learning result of each model using a neural network, a support-vector machine, or the like. Note that the trained machine learning model DB 15 is also capable of storing the model 1, model 2, and model 3 themselves to which various learned parameters (optimized parameters) are applied.

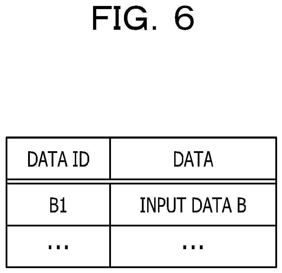

The estimation target data DB 16 is a database that stores a data set including unlabeled data to be input to a learned model to execute estimation. FIG. 6 is a diagram illustrating exemplary information stored in the estimation target data DB 16. As illustrated in FIG. 6, the estimation target data DB 16 stores "data ID, and data" in association with each other. The "data ID" stored here is an identifier for identifying data. The "data" indicates image data to be estimated, which is input data input to each model. In the example of FIG. 6, an exemplary case where the unlabeled data of the data ID "B1" is "input data A". Note that the data to be estimated may also be distributed by a data stream or the like.

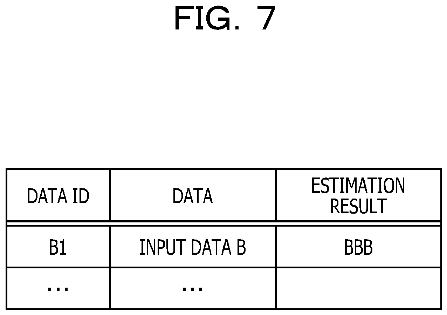

The estimation result DB 17 is a database that stores estimation results based on learned models. Specifically, for example, the estimation result DB 17 stores an estimation result for each estimation target data. FIG. 7 is a diagram illustrating exemplary information stored in the estimation result DB 17. As illustrated in FIG. 7, the estimation result DB 17 stores "data ID, data, and estimation result" in association with each other.

The "data ID" stored here is an identifier for identifying data, the "data" indicates image data to be estimated, and an exemplary case where the "estimation result" is "BBB" is illustrated. Note that the estimation result DB 17 may store the estimation result of the entire models ultimately determined from the estimation result of each model, may store the estimation result of each model, and may store both of them. Note that the information stored here is generated by a model execution unit 22 to be described later and is stored.

The re-training data DB 18 is a database that stores a data set including labeled data for re-learning to be used for the re-learning of the model with deteriorated accuracy. Specifically, for example, the re-training data DB 18 stores "data ID" for identifying re-training data, "image data" to serve as an explanatory variable, and a "label" to serve as an objective variable in association with each other. Note that the information stored here is generated by a re-learning execution unit 24 to be described later and is stored.

The control unit 20 is a processing unit that performs overall control of the deterioration suppression device 10, which is, for example, a processor or the like. The control unit 20 includes a learning execution unit 21, a model execution unit 22, a deterioration detection unit 23, and a re-learning execution unit 24. Note that the learning execution unit 21, the model execution unit 22, the deterioration detection unit 23, and the re-learning execution unit 24 are exemplary electronic circuits included in a processor, exemplary processes to be executed by the processor, or the like.

The learning execution unit 21 is a processing unit that trains a plurality of models. Specifically, for example, the learning execution unit 21 trains a plurality of models having different tendencies to follow the domain shift of the data to be estimated (input data) and to detect deterioration in estimation (determination) accuracy, and stores a learning result in the trained machine learning model DB 15. For example, the learning execution unit 21 causes the feature amount to be learned to differ, thereby generating a plurality of models, which is a plurality of models having different characteristics, in which the deterioration timing is intentionally shifted. Here, a learning method of each model used for an image classifier will be specifically described.

### (First Learning Method)

For example, a first learning method is a method effective when domain shifts can be partially expected, and learning is performed using training data in which data extension is carried out by artificially generating different combinations of the expected domain shifts for each model. For example, according to the first learning method, deterioration of a sensor of a camera for capturing data to be estimated, positional deviation of the camera, and an increase in noise at a time of imaging are assumed, and model learning is executed with those statuses assumed in advance.

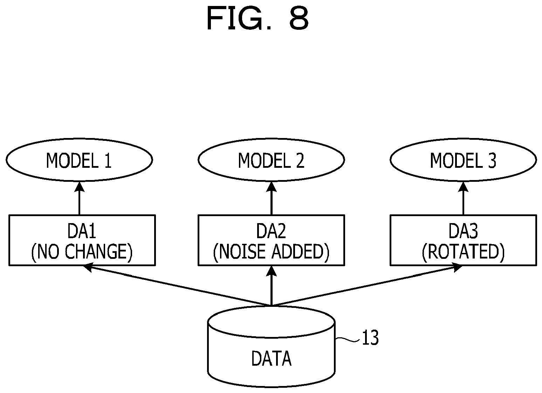

FIG. 8 is a diagram for explaining the first model-learning method. As illustrated in FIG. 8, the learning execution unit 21 executes supervised learning using each labeled data (training data) stored in the initial labeled data DB 13 for the model 1. For example, explaining with reference to FIG. 4 as an example, the learning execution unit 21 inputs the training data 1 (DA 1) to the model 1, and optimizes the parameters of the model 1 using an error backpropagation method or the like in such a manner that the output result of the model 1 matches the label "A".

Meanwhile, the learning execution unit 21 executes, for the model 2 and the model 3, supervised learning using training data obtained by adding noise or the like to the image data of each labeled data stored in the initial labeled data DB 13 while the label remains the same. Explaining with reference to FIG. 4 as an example, the learning execution unit 21 inputs, to the model 2, the training data 1 (DA 2) with noise added to the training data 1, and optimizes the parameters of the model 2 using the error backpropagation method or the like in such a manner that the output result of the model 2 matches the label "A". Furthermore, the learning execution unit 21 inputs, to the model 3, the rotated training data 1 (DA 3) obtained by rotating the training data 1 by a predetermined angle, and optimizes the parameters of the model 3 using the error backpropagation method or the like in such a manner that the output result of the model 3 matches the label "A".

In this manner, the learning execution unit 21 is enabled to generate a plurality of models having slightly different sizes of the model applicability domain by using training data in which the feature amounts are changed little by little.

### (Second Learning Method)

For example, a second learning method is a method effective in a case where a plurality of similar tasks is assumable, and for each model, a different combination of another auxiliary task is simultaneously learned at the same time of learning for the target main task.

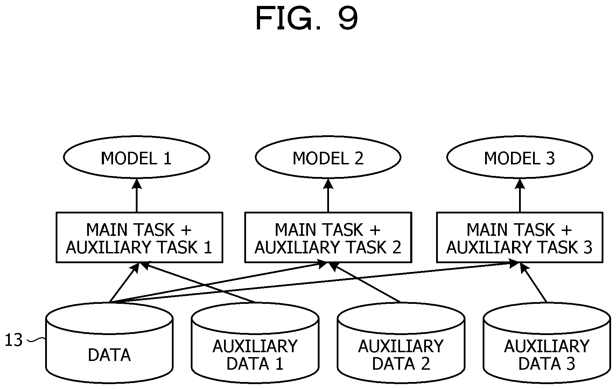

FIG. 9 is a diagram for explaining a second model-learning method. As illustrated in FIG. 9, the learning execution unit 21 executes supervised learning using each labeled data (training data) stored in the initial labeled data DB 13 for the model 1, and also executes supervised learning using labeled auxiliary data 1 different from the training data.

For example, in a case of assuming image classification of a human, the learning execution unit 21 executes the supervised learning using a main task using image data of a person and the supervised learning using the auxiliary task 1 using the auxiliary data 1, which is image data of an animal, thereby learning a feature amount of the image data of the human and learning a feature amount of the image data of the animal.

Explaining with the example above, the learning execution unit 21 executes, for the model 2, the supervised learning simultaneously using the main task using the image data of a human and an auxiliary task 2 using auxiliary data 2 that is image data of a vehicle, thereby learning the feature amount of the human and also learning a feature amount of the image data of the vehicle.

Similarly, the learning execution unit 21 executes, for the model 3, the supervised learning simultaneously using the main task using image data of a human and an auxiliary task 3 using auxiliary data 3 that is image data of a landscape, thereby learning the feature amount of the human and also learning a feature amount of the image data of the landscape.

In this manner, the learning execution unit 21 is enabled to generate a plurality of models having different determination boundaries of the model applicability domain by learning the feature amount that may be noise in addition to the learning of the expected feature amount. Note that each auxiliary data is stored in the storage unit 12 in advance.

### (Third Learning Method)

For example, a third learning method is a method effective in a case where unlabeled data can be used, and executes supervised learning and unsupervised learning for each model. Specifically, for example, the third learning method performs learning in such a manner that an estimated value of each model is correctly output for the labeled training data and a different label is output for each unlabeled data.

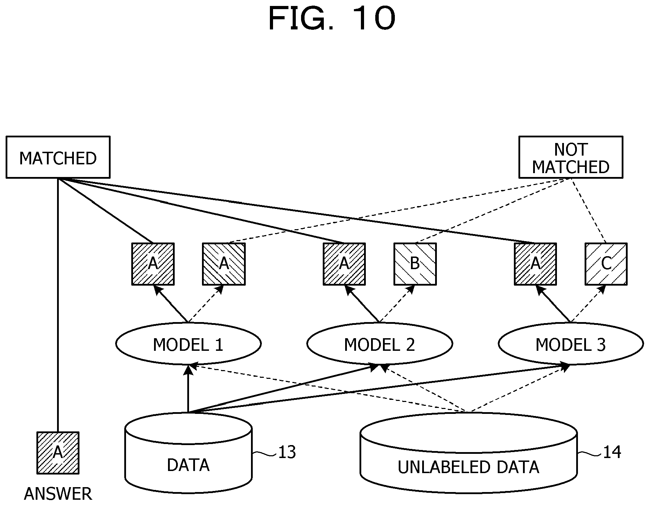

FIG. 10 is a diagram for explaining a third model-learning method. For example, the learning execution unit 21 inputs the training data 1 assigned with the label "A" to each of the model 1, model 2, and model 3. Then, the learning execution unit 21 optimizes the parameters of the model 1 using the error backpropagation method or the like in such a manner that the output result of the model 1 matches the label "A". Similarly, the learning execution unit 21 optimizes the parameters of the model 2 in such a manner that the output result of the model 2 matches the label "A", and optimizes the parameters of the model 3 in such a manner that the output result of the model 3 matches the label "A".

In parallel with the supervised learning described above, the learning execution unit 21 inputs the unlabeled training data A obtained from the initial unlabeled data DB 14 to each of the model 1, model 2, and model 3. Then, the learning execution unit 21 trains each model in such a manner that the output result of the model 1 becomes "A", the output result of the model 2 becomes "B", and the output result of the model 3 becomes "C".

In this manner, the learning execution unit 21 trains the same feature amount and also trains a different feature amount for each model, thereby being enabled to generate a plurality of models having different sizes and numbers of the model applicability domain.

### (Fourth Learning Method)

For example, a fourth learning method trains a plurality of models having different model types, degrees of freedom, and regularization by supervised learning using the training data stored in the initial labeled data DB 13. For example, it generates a plurality of models with different algorithms to be applied.

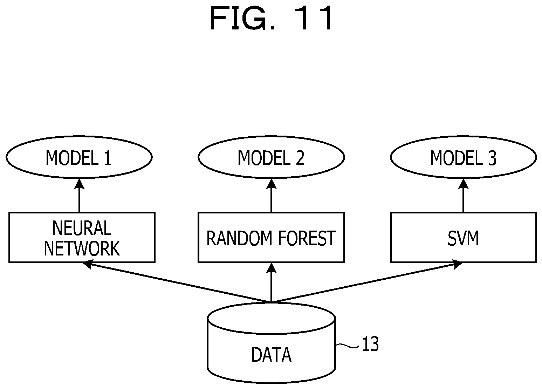

FIG. 11 is a diagram for explaining a fourth model-learning method. As illustrated in FIG. 11, the learning execution unit 21 prepares a model 1 using a neural network, a model 2 using a random forest, and a model 3 using a support-vector machine (SVM), and inputs the training data 1 assigned with the label "A" to each of them. Then, the learning execution unit 21 trains each model in such a manner that the output of each model matches the label "A".

The learning execution unit 21 generates a plurality of models by any one or a combination of the first to fourth learning methods described above. Note that a selection criterion is not limited to designation made by a user, and the learning execution unit 21 may refer to the training data and automatically make a selection by associating the target category with the learning method in advance.

Returning to FIG. 3, the model execution unit 22 is a processing unit that executes estimation and classification such as image classification using each model generated by the learning execution unit 21. For example, the model execution unit 22 reads various parameters from the trained machine learning model DB 15, and constructs the learned model 1, model 2, and model 3. Then, the model execution unit 22 inputs input data B stored in the estimation target data DB 16 to each of the model 1, model 2, and model 3, and obtains an output label (output result) of each model.

Thereafter, the model execution unit 22 determines an estimation result of the entire models on the basis of the output result of each model, and stores it in the estimation result DB 17. Note that various methods may be adopted as a method of determining the estimation result of the entire models. For example, in a case where the certainty factor can be obtained from each model, the model execution unit 22 selects the output result of the model with the highest certainty factor. Furthermore, the model execution unit 22 can also make a selection by a rule of majority from the output results.

The deterioration detection unit 23 is a processing unit that detects deterioration in accuracy of each model. Specifically, the deterioration detection unit 23 monitors the execution, output result, and the like of each model, and in a case where deterioration in accuracy is detected in any of the models, it outputs information associated with the deterioration in accuracy, such as the model with the deterioration in accuracy, the input data at the time when the deterioration in accuracy is detected, and the number of time of the deterioration in accuracy, to the re-learning execution unit 24.

Note that various commonly used methods may be adopted as a method of detecting deterioration. For example, the deterioration detection unit 23 is also capable of detecting, as the deterioration in accuracy, a model in which the certainty factor has become equal to or less than a threshold value, a model in which the number of times the certainty factor has become equal to or less than the threshold value has become equal to or higher than a threshold value, a model that has not been continuously selected as an estimation result of the entire models more than a predetermined number of times, or the like.

The re-learning execution unit 24 is a processing unit that executes re-learning of a model with deterioration in accuracy. Specifically, for example, the re-learning execution unit 24 generates re-training data in which an estimation result of a model with no deterioration in accuracy is used as correct answer information, and stores it in the re-training data DB 18. Then, the re-learning execution unit 24 executes re-learning of the model with the deterioration in accuracy using the generated re-training data.

For example, the re-learning execution unit 24 selects, as the re-training data, a certain number of data that can be collected from immediately after the detection of the deterioration in accuracy until another model is subject to deterioration in accuracy. At this time, in a case where data associated with the deterioration is presumable, the re-learning execution unit 24 preferentially selects the data estimated to be the cause of the deterioration. For example, the re-learning execution unit 24 selects data in which the model with the deterioration in accuracy outputs a label different from that of the model with no deterioration in accuracy.

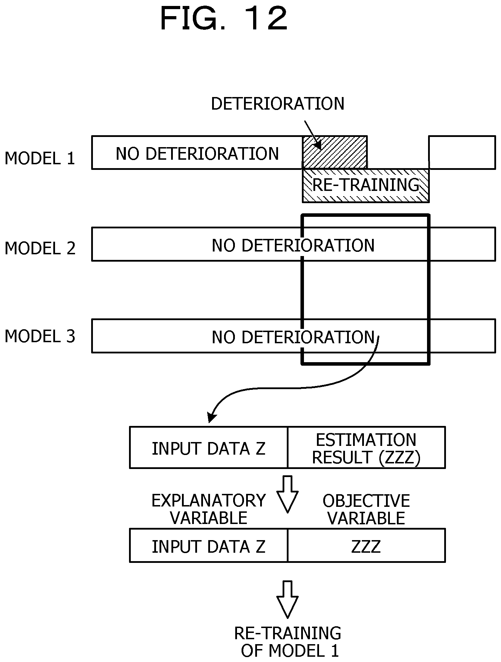

FIG. 12 is a diagram for explaining re-learning. As illustrated in FIG. 12, in a case where deterioration in accuracy of the model 1 is detected among the model 1, model 2, and model 3, the re-learning execution unit 24 executes the re-learning of the model 1 using a certain number of estimation results of the model 2 and model 3 at the time when the deterioration in accuracy of the model 1 occurs. For example, for input data Z, the re-learning execution unit 24 obtains the estimation result (ZZZ) of the model 3 that outputs a label different from that of the model 1. Then, the re-learning execution unit 24 executes the re-learning of the model 1 using re-training data in which the input data Z is used as an explanatory variable and the estimation result (ZZZ) is used as an objective variable.

Note that the re-learning execution unit 24 is also capable of executing the re-learning of the model 1 by generating the re-training data using all the estimation results estimated in other models while the accuracy of the model 1 is deteriorated. Furthermore, the re-learning execution unit 24 is also capable of executing the re-learning of the model 1 by generating the re-training data using only the estimation results (output labels) different from that of the model 1 among all the estimation results estimated in other models while the accuracy of the model 1 is deteriorated.

Furthermore, in a case where the re-learning execution unit 24 detects deterioration in accuracy of equal to or more than a certain number of models simultaneously, it may determine to be unrecoverable, stop the estimation (determination), and notify the user. For example, in a case where the re-learning execution unit 24 detects deterioration in accuracy of another model before obtaining 1,000 estimation results, which is the number of data needed for the re-learning, it determines to be unrecoverable. Furthermore, in a case where deterioration in accuracy occurs in more than half of the models simultaneously or in a certain period of time, the re-learning execution unit 24 determines to be unrecoverable.

### [Series of Flow]

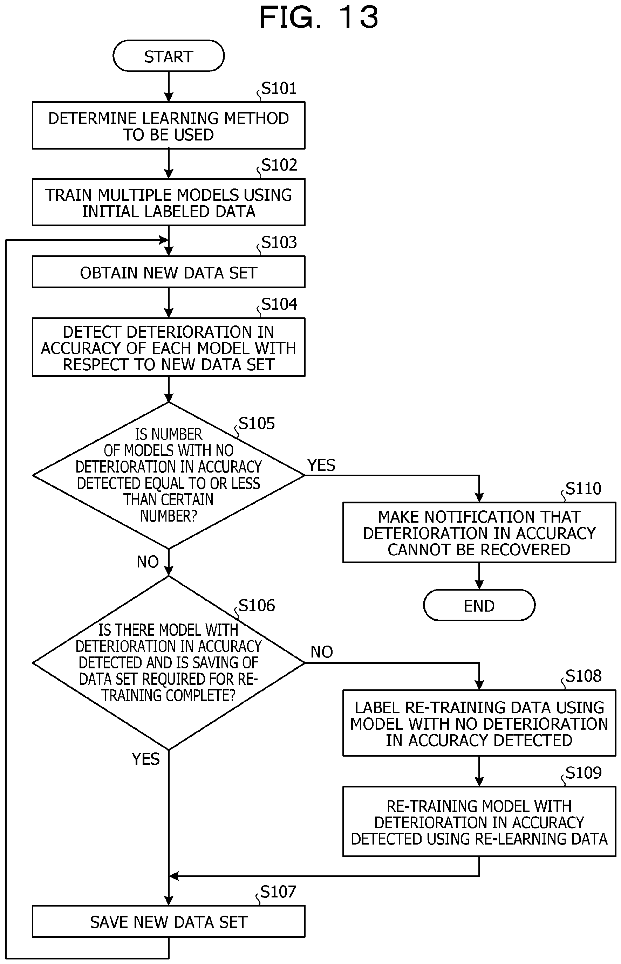

FIG. 13 is a flowchart illustrating a flow of a series of processes according to the first embodiment. As illustrated in FIG. 13, when the process starts, the learning execution unit 21 determines a learning method to be used from among the first to fourth learning methods according to an instruction issued by the user, a type of training data associated with the learning methods in advance, or the like (S101).

Subsequently, the learning execution unit 21 trains a plurality of models by the determined learning method using the training data stored in the initial labeled data DB 13 (S102). At this time, depending on the learning method, learning using unlabeled data, training data with noise, or the like is executed.

Thereafter, the model execution unit 22 obtains a new data set to be estimated (S103), and the deterioration detection unit 23 detects deterioration in accuracy of each model with respect to the new data set (S104). Note that the new data set may also be a data set including the data to be estimated, or may also be a data set including verification data prepared for estimating the deterioration in accuracy.

Then, if there are more than a certain number of models with no deterioration in accuracy detected (No in S105), the re-learning execution unit 24 estimates whether or not there is a model with deterioration in accuracy detected and a data set needed for re-learning is saved (S106).

Here, if the data set needed for the re-learning is save (Yes in S106), the re-learning execution unit 24 obtains a new data set to be estimated next from an administrator terminal or the like, and saves it (S107). Thereafter, S103 and subsequent steps are executed.

On the other hand, if the data set needed for the re-learning is not saved (No in S106), the re-learning execution unit 24 executes labeling of the re-training data using the model with no deterioration in accuracy detected (S108), and re-trains the model with the deterioration in accuracy detected using the re-training data (S109). Thereafter, S107 and subsequent steps are executed.

Furthermore, if the number of models with no deterioration in accuracy detected is equal to or more than the certain number in S105 (Yes in S105), the re-learning execution unit 24 notifies an administrator of the fact that the deterioration in accuracy is unrecoverable or displays the fact on a display (S110).

### [Estimation Process Flow]

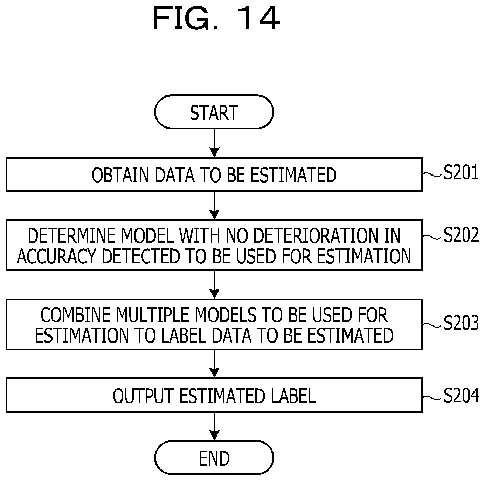

FIG. 14 is a flowchart illustrating a flow of the estimation process according to the first embodiment. As illustrated in FIG. 14, when the process starts, the model execution unit 22 obtains data to be estimated from the estimation target data DB 16 (S201).

Subsequently, the model execution unit 22 inputs the data to be estimated to each model, determines a model with no deterioration in accuracy detected, which is to be used for the estimation (S202), and executes labeling of the data to be estimated by combining a plurality of models to be used for the estimation (S203). Then, the model execution unit 22 outputs the estimated label to the estimation result DB 17 and the like as an estimation result (S204).

### [Effects]

As described above, the deterioration suppression device 10 performs labeling of unlabeled data with a model with no deterioration in accuracy, and re-trains a deteriorated model using the labeled data by the same learning method, thereby being enabled to follow a domain shift. Furthermore, the deterioration suppression device 10 trains a plurality of models by different methods, and detects deterioration in accuracy of each model with respect to the data having been subject to the domain shift, and in a case where deterioration is detected, it is capable of selecting data to be used for learning from new training data labeled using a model with no deterioration detected and re-learning the model with the deterioration in accuracy. As a result, the deterioration suppression device 10 is enabled to suppress the deterioration in accuracy of the entire models.

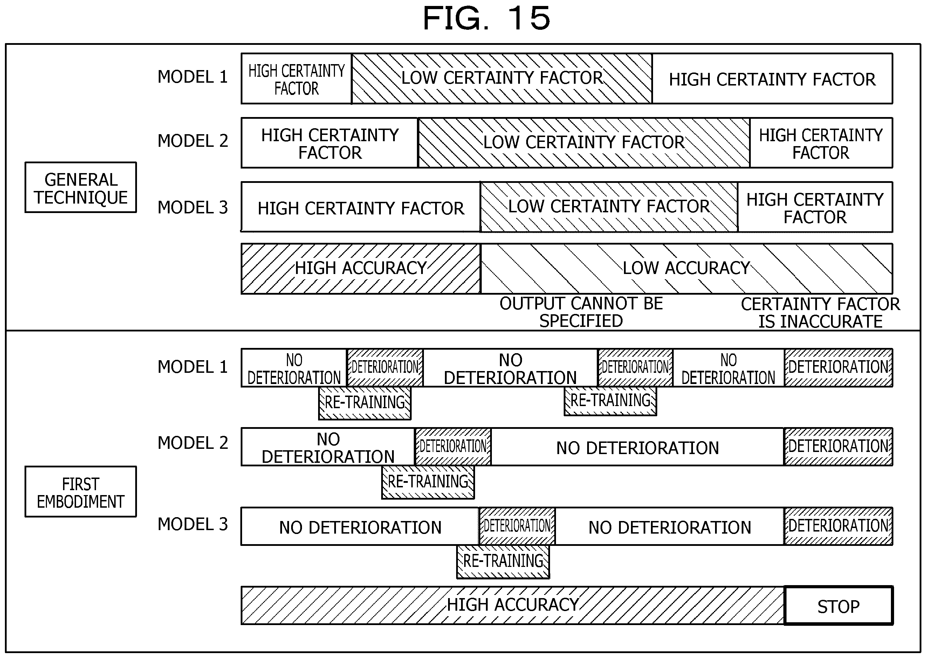

FIG. 15 is a diagram for explaining effects of the first embodiment. As illustrated in FIG. 15, according to a general technique such as the ensemble learning or the like, while highly accurate estimation can be executed when a certainty factor of each model is high, when the certainty factor of each model decreases due to a domain shift based on a lapse of time, it is not possible to specify output (prediction), thereby decreasing estimation accuracy.

On the other hand, according to the deterioration suppression device 10 according to the first embodiment, when accuracy of any of the models deteriorates, it executes accuracy recovery using re-training data in which an estimation result of a model with no deterioration in accuracy detected is used as correct answer information, whereby it becomes possible to reduce a decrease in accuracy for data in which a domain shift occurs with a lapse of time or the like, and to maintain high accuracy as a whole. Furthermore, the deterioration suppression device 10 according to the first embodiment stops estimation when the accuracy of all the models deteriorates, whereby it becomes possible to suppress erroneous output at a time of an unrecoverable decrease in accuracy.

### [Second Embodiment]

Meanwhile, the deterioration detection unit 23 according to the first embodiment is capable of detecting deterioration in accuracy of a model using various methods. Here, as one of the methods, a method of detecting, for each model, deterioration in accuracy of a model by clustering a feature amount space of the model will be described. Note that the feature amount space is an example of a space expressing a model applicability domain, a feature amount obtained from input data, and a feature amount obtained from a final layer of a neural network and the like.

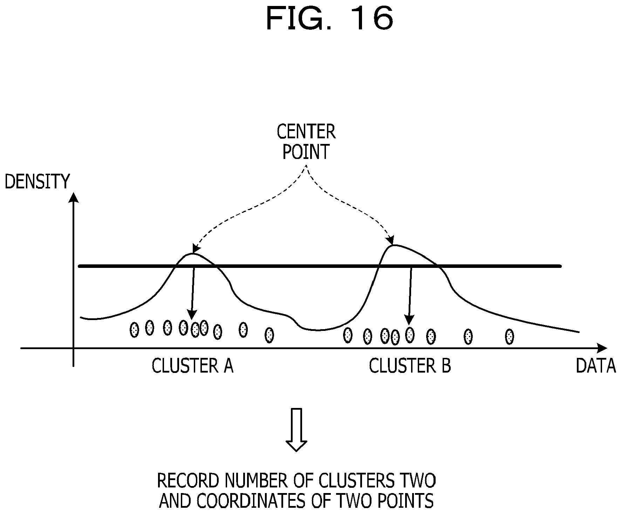

First, the deterioration detection unit 23 calculates density of each data in a feature amount space in an initial learning stage (before deterioration) using a Gauss distance or the like. Subsequently, the deterioration detection unit 23 records the number of clusters and a center point (representative point) of a region having a certain density or higher in each cluster. FIG. 16 is a diagram for explaining specification of the number of clusters and the center points. As illustrated in FIG. 16, the deterioration detection unit 23 generates a graph in which the horizontal axis represents a feature amount and the vertical axis represents density. Then, the deterioration detection unit 23 specifies coordinates of a position (center point) having the highest density among the data (training data) belonging to each known cluster, and stores them in the storage unit 12. In the example in FIG. 16, the number of clusters including a cluster A and a cluster B is stored as two, and two center points including the center point of the cluster A and the center point of the cluster B are stored.

Note that information indicating a feature of data may be adopted as the coordinates of the center point, and for example, a feature amount that may be obtained from each model and the density information described above may be adopted. Furthermore, as the feature amount, information that may be obtained from the final layer of the neural network, information that may be obtained from input data itself, an average pixel value of the input data, and the like may be adopted, for example. Furthermore, information on data classified in the feature amount space before deterioration may be used for the process described above by being obtained at the time of learning and saved in the storage unit 12 or the like.

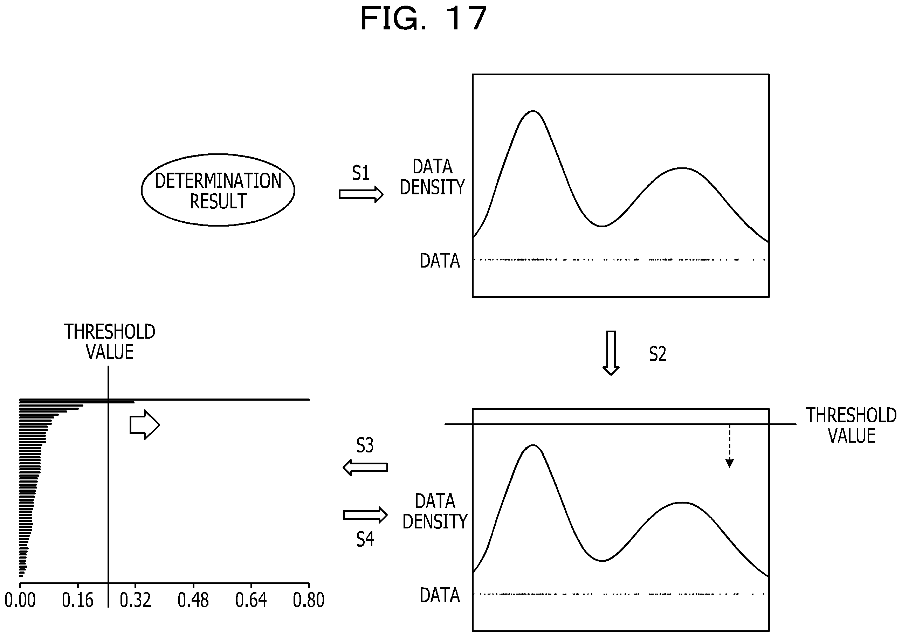

Next, the deterioration detection unit 23 executes clustering to extract clusters and data belonging to the clusters on the basis of the density of the input data under the condition that the number of clusters and the number of center points described above coincide with each other. FIG. 17 is a diagram for explaining clustering after operation. As illustrated in FIG. 17, the deterioration detection unit 23 generates a graph in which the horizontal axis represents a feature amount and the vertical axis represents density using the feature amount and the density of the input data based on the estimation result (determination result) by the model execution unit 22 (S1). Subsequently, the deterioration detection unit 23 lowers a threshold value for the density in increments of a predetermined value, and searches for a minimum threshold value that gives the number same as the specified number of clusters described above (two in this case) (S2).

At this time, the deterioration detection unit 23 executes persistent homology conversion (PH conversion) on the feature amount of the input data equal to or higher than the threshold value to refer to a zero-dimensional connected component, and executes computation and specification of the number of clusters depending on whether or not the number of bars having a radius equal to or higher than a predetermined threshold value coincides with the number of clusters specified in advance (S3). Here, if the number of bars exceeding the threshold value does not coincide with the prior number of clusters, the deterioration detection unit 23 lowers the threshold value by the predetermined value, and repeats the process (S4).

In this manner, the deterioration detection unit 23 repeats the process of lowering the threshold value for the density to extract input data with density equal to or higher than the threshold value and the process of computing the number of clusters by the PH conversion process on the extracted input data until the number of clusters that coincides with the prior number of clusters is detected. Then, when the numbers of clusters coincide with each other, the deterioration detection unit 23 specifies center points C1 and C2 from the input data with the density equal to or higher than the threshold value (density) at that time. Thereafter, the deterioration detection unit 23 stores the information obtained by the clustering in the storage unit 12.

Thereafter, the deterioration detection unit 23 specifies the transition of the center point from the positional relationship between the center point before the deterioration and the center point after the operation. Then, the deterioration detection unit 23 associates the cluster A (label = class A) with the center point C1, and associates the cluster B (label = class B) with the center point C2. As a result, the deterioration detection unit 23 sets the class A as a label for each piece of input data with the density equal to or higher than the threshold value and belonging to the cluster same as the center point C1. Similarly, the deterioration detection unit 23 sets the class B as a label for each piece of input data with the density equal to or higher than the threshold value and belonging to the cluster same as the center point C2.

Next, a label is associated with each piece of input data lower than the threshold value, which has not been extracted by the clustering unit 25. The deterioration detection unit 23 separately measures a distance to the center C1 and a distance to C2 of each cluster for each piece of the unextracted input data, and in a case where the second closest distance is longer than the maximum value of the distances between the centers of the respective clusters, it determines that the data belongs to the closest cluster.

That is, among regions other than a region X (cluster A) and a region Y (cluster B) for which the clusters have been designated by the method described above, the deterioration detection unit 23 determines input data of a region P outside the region X as the cluster A, and determines input data of a region Q outside the region Y as the cluster B.

Then, for input data of a region Z whose second closest distance is shorter than the maximum value of the distances between the centers of the respective clusters (located in the middle of a plurality of clusters), the deterioration detection unit 23 determines that data of a plurality of nearby clusters are mixed, and measures and gives the probability of each cluster with regard to each piece of the input data. Specifically, the deterioration detection unit 23 calculates the probability of belonging to each cluster for each piece of the input data belonging to the region Z using the k-nearest neighbor method, the uniform random method, the distribution ratio holding method, or the like, and generates and assigns probabilistic labels (the probability of the class A, the probability of the class B, and the probability of the class C).

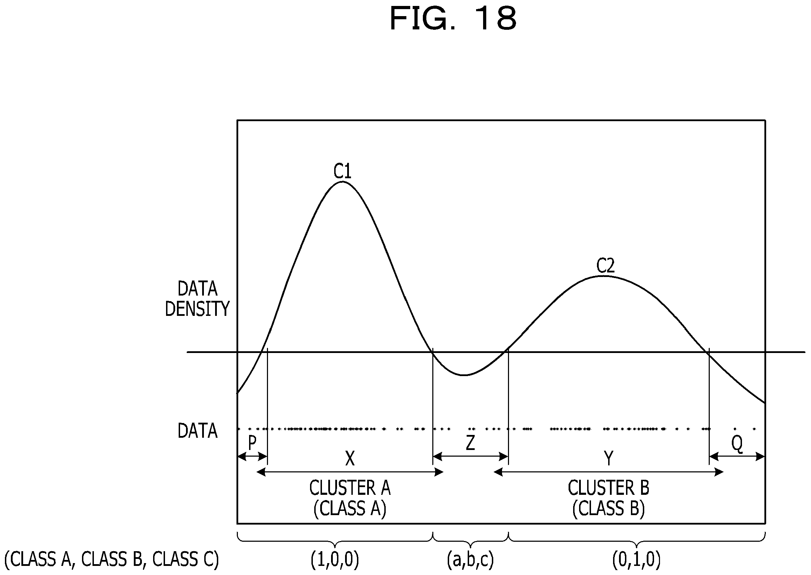

FIG. 18 illustrates the label information assigned to each input data and estimated by the method described above. FIG. 18 is a diagram for explaining labeling of input data. The estimated labels are assigned according to the probability of belonging to each cluster (the probability of belonging to the class A, the probability of belonging to the class B, and the probability of belonging to the class C). As illustrated in FIG. 18, each of the input data of the region X and the region P is assigned with an estimated label [1, 0, 0], each of the input data of the region Y and the region Q is assigned with an estimated label [0, 1, 0], and each of the input data of the region Z is assigned with an estimated label [a, b, c]. Note that a, b, and c represent the probability calculated by a method such as the k-nearest neighbor method. Then, the deterioration detection unit 23 stores the correspondence between each input data and the estimated label in the storage unit 12.

Thereafter, the deterioration detection unit 23 obtains the determination result and the estimation result for each of the input data, and executes the deterioration determination by comparison between them. For example, with respect to a probability vector of each of the input data (each point) indicated by each estimation result, the deterioration detection unit 23 uses the sum (inner product) of component products in the vector representation of the determination result by model as a score of that point, and compares a value obtained by dividing the total of the scores by the number of pieces of data with a threshold value, thereby executing the deterioration determination.

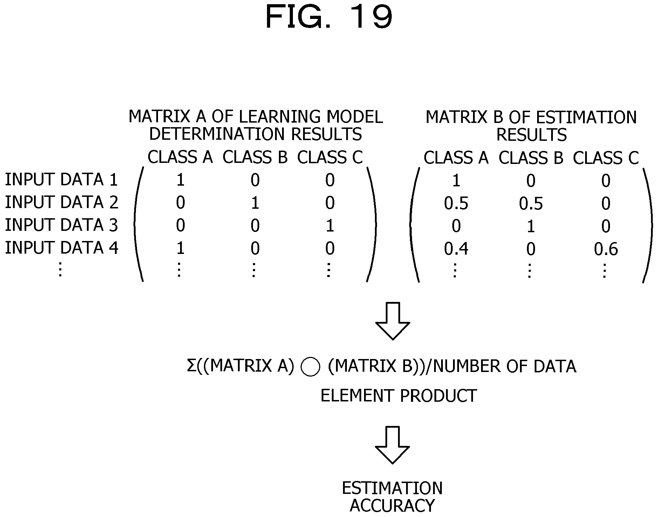

FIG. 19 is a diagram for explaining details of determination of model accuracy. As illustrated in FIG. 19, a determination result and an estimation result of a trained machine learning model are obtained with respect to each of the input data. For example, input data 1 has a determination result of [1, 0, 0] as it is determined to be the class A by the model 1, and has an estimation result of [1, 0, 0] as it is estimated to belong to the cluster A by the deterioration detection unit 23. Similarly, input data 2 has a determination result of [0, 1, 0] as it is determined to be the class B by the model 1, and has an estimation result of [0.5, 0.5, 0] based on the probability calculated while being estimated to belong to the region Z by the deterioration detection unit 23.

Then, the deterioration detection unit 23 generates a matrix of the determination results of the respective input data by the model 1 and a matrix of the estimation results of the respective input data, calculates the sum of the element products, and divides the sum of the element products by the number of pieces of data, thereby calculating estimation accuracy (score). Then, the deterioration detection unit 23 detects that the accuracy of the model 1 is in a deteriorated state in a case where the estimation accuracy is lower than a threshold value.

As described above, the deterioration detection unit 23 executes the process described above for each model, thereby being enabled to specify a state of each model having a tendency of being deteriorated.

### [Third Embodiment]

Incidentally, while the embodiments of the present invention have been described above, the present invention may be carried out in a variety of different modes in addition to the embodiments described above.

### [Deterioration Detection]

For example, before a model in which deterioration has been detected recovers, deterioration of another model may occur. In this case, the re-learning execution unit 24 is capable of selecting, as re-training data, a certain number of data traced back from the data immediately before the accuracy of the another model deteriorates.

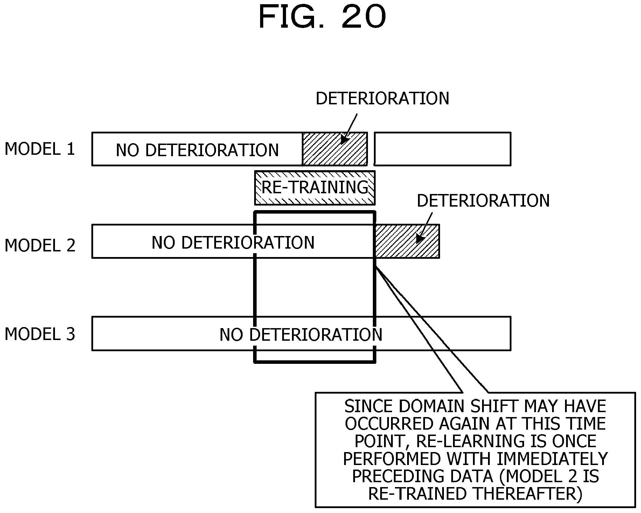

FIG. 20 is a diagram for explaining exemplary recovery when deterioration of a plurality of models is detected. As illustrated in FIG. 20, it is assumed that deterioration of the model 1 is detected, and then deterioration of the model 2 is detected before a recovery process of the model 1 is carried out.

In this case, the re-learning execution unit 24 estimates that a domain shift occurs before the accuracy of the model 1 is deteriorated and a domain shift occurs again before the accuracy of the model 2 is deteriorated. Then, the re-learning execution unit 24 generates re-training data using the estimation result of the model 2 before the deterioration and the estimation result of the model 3, and executes re-learning of the model 1 to recover the accuracy of the model 1.

Thereafter, the re-learning execution unit 24 generates re-training data using the estimation result of the recovered model 1 and the estimation result of the model 3, and executes re-learning of the model 2 to recover the accuracy of the model 2.

In this manner, the re-learning execution unit 24 is capable of making a recovery in stages even when the accuracy of a plurality of models deteriorates. Furthermore, the re-learning execution unit 24 is capable of recovering a model in an accuracy deterioration state using an estimation result of a state with no deterioration, and suppressing occurrence of an erroneous recovery process. However, in a case where it is not possible to obtain equal to or more than a certain number of estimation results in which no deterioration in accuracy has occurred at the time of recovering each model, the re-learning execution unit 24 determines that it is unrecoverable, and notifies the administrator or the like of the fact.

### [Use of Feature Amount]

While an exemplary case of using the feature amount of the input data has been described in the embodiments described above, it is not limited thereto, and various feature amounts used in the machine learning or the like may also be adopted as long as it is information indicating the feature of the input data. Furthermore, the feature amount space is an example of a space whose coordinates are the feature amounts obtained from the input data, and while the two-dimensional space is exemplified in the first embodiment, it is not limited thereto, and various feature amount spaces used in the machine learning and the deep learning may be used. For example, it is possible to use a feature amount space representing a model applicability domain.

### [Density Calculation]

While an exemplary case of using the Gauss density has been described in the second embodiment, it is not limited thereto, and various publicly known methods, such as eccentricity and the k-nearest neighbor algorithm (KNN), may be used. Note that, while the density increases as the value increases in the Gauss density and the like, the density increases as the value (distance) decreases in the KNN, and accordingly, a point with the lowest density is selected in specifying the representative point.

### [Numerical Values, etc.]

Furthermore, the numerical values, each threshold value, the feature amount space, the number of clusters, the number of labels, and the like used in the embodiments described above are merely examples, and may be optionally altered. Furthermore, the input data, the learning method, and the like are also merely examples, and may be optionally altered. Furthermore, various methods such as neural networks may be adopted for the trained machine learning model.

### [System]

Pieces of information including a processing procedure, a control procedure, a specific name, various types of data, and parameters described above or illustrated in the drawings may be optionally changed unless otherwise specified.

Furthermore, each component of each device illustrated in the drawings is functionally conceptual, and is not necessarily physically configured as illustrated in the drawings. For example, specific forms of distribution and integration of each device are not limited to those illustrated in the drawings. That is, the whole or a part of the devices may be configured by being functionally or physically distributed or integrated in optional units depending on various loads, usage situations, or the like. For example, a device for executing a model and performing estimation and a device for monitoring the model and detecting deterioration may be constructed in separate housings.

Moreover, all or any part of individual processing functions performed in each device may be implemented by a central processing unit (CPU) and a program analyzed and executed by the corresponding CPU, or may be implemented as hardware by wired logic.

### [Hardware]

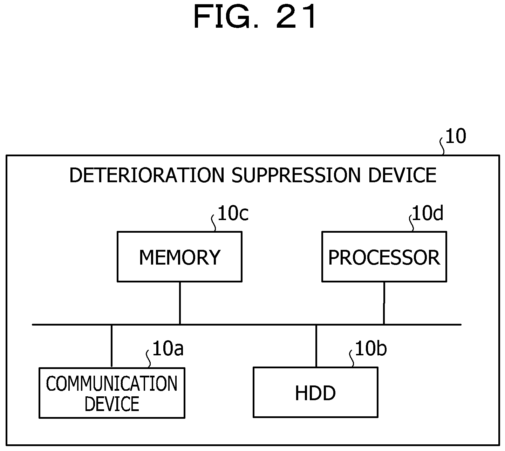

FIG. 21 is a diagram for explaining an exemplary hardware configuration. As illustrated in FIG. 21, the deterioration suppression device 10 includes a communication device 10a, a hard disk drive (HDD) 10b, a memory 10c, and a processor 10d. Furthermore, the respective units illustrated in FIG. 21 are mutually connected by a bus or the like.

The communication device 10a is a network interface card or the like, which communicates with another device. The HDD 10b stores programs and DBs for operating the functions illustrated in FIG. 3.

The processor 10d reads, from the HDD 10b or the like, a program that executes processing similar to that of each processing unit illustrated in FIG. 3, and loads it in the memory 10c, thereby operating a process for executing each function described with reference to FIG. 3 or the like. For example, the process executes a function similar to that of each processing unit included in the deterioration suppression device 10. Specifically, the processor 10d reads, from the HDD 10b or the like, a program having a function similar to that of the learning execution unit 21, the model execution unit 22, the deterioration detection unit 23, the re-learning execution unit 24, or the like. Then, the processor 10d executes a process for executing processing similar to that of the learning execution unit 21, the model execution unit 22, the deterioration detection unit 23, the re-learning execution unit 24, or the like.

As described above, the deterioration suppression device 10 operates as an information processing apparatus that executes a deterioration suppression method by reading and executing a program. Furthermore, the deterioration suppression device 10 is also capable of implementing functions similar to those of the embodiments described above by reading the program from a recording medium using a medium reading device and executing the read program. Note that other programs referred to in the embodiments are not limited to being executed by the deterioration suppression device 10. For example, the present invention may be similarly applied to a case where another computer or server executes the program, or a case where those units cooperatively execute the program.

### CITATION LIST

Examples of the related art include as follows: "Ensemble learni ng", searched on October 4, 2019, Internet <URL: https://en.wikipedia.org/w iki/Ensemble_learning>

### REFERENCE SIGNS LIST

10 Deterioration suppression device
11 Communication unit
12 Storage unit
13 Initial labeled data DB
14 Initial unlabeled data DB
15 Trained machine learning model DB
16 Estimation target data DB
17 Estimation result DB
18 Re-training data DB
20 Control unit
21 Learning execution unit
22 Model execution unit
23 Deterioration detection unit
24 Re-learning execution unit

## Claims

1. A deterioration suppression program comprising instructions which, when the instructions are executed by a computer, cause the computer to perform processing, the processing including:
generating a plurality of trained machine learning models with different characteristics on a basis of each of training data included in a first training data set and assigned with a label that indicates correct answer information;
in a case where estimation accuracy of estimation of the label with respect to input data to be estimated by any trained machine learning model among the plurality of trained machine learning models becomes lower than a predetermined standard, generating a second training data set that includes a plurality of pieces of training data that uses an estimation result by a trained machine learning model with the estimation accuracy equal to or higher than the predetermined standard; and
executing re-learning of the trained machine learning model with the estimation accuracy lower than the predetermined standard using the second training data set.

2. The deterioration suppression program according to claim 1, wherein
the generating of the plurality of trained machine learning models generates, in a case where a domain shift in which a feature of the input data changes with a lapse of time is possible to be expected, the plurality of trained machine learning models with the different characteristics using the input data after the domain shift that is possible to be expected.

3. The deterioration suppression program according to claim 2, wherein the generating of the plurality of trained machine learning models includes
generating a first trained machine learning model by machine learning that uses each of the training data included in the first training data set,
generating, by machine learning, a second trained machine learning model by machine learning that uses training data with noise obtained by adding the noise to each of the training data without changing the label, and
generating a third trained machine learning model by machine learning that uses rotated training data obtained by rotating each of the training data without changing the label.

4. The deterioration suppression program according to claim 1, wherein the generating of the plurality of trained machine learning models includes
generating the plurality of trained machine learning models by machine learning that uses the first training data set that includes each of the training data assigned with the label, which is an estimation target, and an analogous training data set that includes each of training data assigned with a label analogous to the estimation target.

5. The deterioration suppression program according to claim 1, wherein the generating of the plurality of trained machine learning models includes
generating the plurality of trained machine learning models by supervised learning based on the label that uses the first training data set, and
generating the plurality of trained machine learning models by unsupervised learning using unlabeled data set that includes each of training data not assigned with the label in such a manner that outputs of the plurality of trained machine learning models differ.

6. The deterioration suppression program according to claim 1, wherein the generating of the plurality of trained machine learning models includes generating, by machine learning, the plurality of trained machine learning models with different learning algorithms on a basis of each of the training data.

7. The deterioration suppression program according to claim 1, wherein the generating of the second training data set includes generating, for the trained machine learning model with the estimation accuracy lower than the predetermined standard, the second training data set in which an estimation result of another trained machine learning model with the estimation accuracy equal to or higher than the predetermined standard at a time point when the estimation accuracy becomes lower than the predetermined standard is used as correct answer information.

8. The deterioration suppression program according to claim 1, wherein in a case where equal to or more than a predetermined number of the estimation results by the trained machine learning model with the estimation accuracy equal to or higher than the predetermined standard cannot be obtained, or in a case where the estimation accuracy of all of the plurality of trained machine learning models becomes lower than the predetermined standard, the executing of the re-learning determines that the accuracy of the entire plurality of trained machine learning models is unrecoverable, and outputs a determination result.

9. A computer-implemented deterioration suppression method comprising:
generating a plurality of trained machine learning models with different characteristics on a basis of each of training data included in a first training data set and assigned with a label that indicates correct answer information;
in a case where estimation accuracy of estimation of the label with respect to input data to be estimated by any trained machine learning model among the plurality of trained machine learning models becomes lower than a predetermined standard, generating a second training data set that includes a plurality of pieces of training data that uses an estimation result by a trained machine learning model with the estimation accuracy equal to or higher than the predetermined standard; and
executing re-learning of the trained machine learning model with the estimation accuracy lower than the predetermined standard using the second training data set.

10. An information processing apparatus comprising:
a generation unit configured to generate a plurality of trained machine learning models with different characteristics on a basis of each of training data included in a first training data set and assigned with a label that indicates correct answer information;
a generation unit configured to generate, in a case where estimation accuracy of estimation of the label with respect to input data to be estimated by any trained machine learning model among the plurality of trained machine learning models becomes lower than a predetermined standard, a second training data set that includes a plurality of pieces of training data that uses an estimation result by a trained machine learning model with the estimation accuracy equal to or higher than the predetermined standard; and
an execution unit configured to execute re-learning of the trained machine learning model with the estimation accuracy lower than the predetermined standard using the second training data set.
